(19) 

**Europäisches Patentamt**
**European Patent Office**
**Office européen des brevets**

(11) **EP 2 233 951 A1**

(12) **EUROPEAN PATENT APPLICATION**

(43) Date of publication:
**29.09.2010 Bulletin 2010/39**

(21) Application number: **09156549.9**

(22) Date of filing: **27.03.2009**

(51) Int Cl.:
***G01V 7/00*** *(2006.01)*

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Elmarx Srl
38017 Mezzolombardo (IT)**

(72) Inventor: **Fontana, Giorgio
38100, Trento (IT)**

(74) Representative: **TBK-Patent
Bavariaring 4-6
80336 München (DE)**

(54) **Gravitational wave generator utilizing coupled oscillators and methods for amplification of gravitational waves**

(57) It is provided a use of a high vacuum chamber as an amplifier of a gravitational wave. Furthermore, it is provided a device for generating a gravitational wave, comprising a generator (10, 18) of an external energy; a primary vacuum chamber (20) with window (19) transparent for the external energy; a first vacuum pump (21) connected to the primary vacuum chamber (20) and configured to evacuate the primary vacuum chamber (20); a converting material (22, 12) for converting the external energy into gravitational waves, the converting material being disposed inside the primary vacuum chamber (20) such that the external energy illuminates the converting material (22); a second vacuum chamber (16, 23) used as an amplifier of the gravitational wave; and a second vacuum pump (24) connected to the second vacuum chamber (16, 23) and configured to evacuate the primary vacuum chamber (16, 23).

*FIG.3*

EP 2 233 951 A1

**Description**

FIELD OF THE INVENTION

The present invention relates to a use of a high vacuum chamber and a device for generating and amplifying gravitational waves.

BACKGROUND OF THE INVENTION

Einstein theory of relativity and astronomical observation made by Taylor and Hulse have given convincing proof of the existence of gravitational waves, Taylor and Hulse obtained a Nobel prize for this discovery. In fact the orbital decay of a binary stars have been analyzed using the formalism of Einstein's General Relativity with the result that the stars emit Gravitational Waves because of their orbital motion, this phenomenon causes a predictable decay of the orbit that fits observations.

Efficient generation of Gravitational Waves (GWs) is a century long endeavor. In this field there is a large number of contributions, where we refer to Landau and Lifshits (1975), Misner, Thorne and Wheeler (1973), Pinto and Rotoli (1988) and Baker (2000, 2004) for a brief exemplification of various traditional approaches.

The laboratory generation of GW was discussed by Pinto & Rotoli in General Relativity and Gravitational Physics, 1998, World Scientific, Singapore. They found (page 560) terrestrial laboratory GW generation to be "... at the limit of the state of the art ... ", but they did not consider any mechanism of amplification both internal and external like those disclosed by the present document. The general concept of the laboratory generation of GW is to emulate GW generated by energizable celestial systems (rotating binary stars, star explosions, collapse to black holes, etc) as observed by astrophysicists by the use of micro, terrestrial energizable systems.

Robert M. L. Baker, Jr. in U.S. Pat. No. 6,417,597, shows that a third time derivative or jerk of a mass generates gravitational waves (GW) or produces a quadrupole moment and that the GW energy radiates along the axis of the jerk or if a harmonic oscillation, then radiates in a plane normal to the axis of the oscillation. The force producing the jerk or oscillation can be gravitational attraction, centrifugal, electromagnetic, nuclear, or, in fact, any force. The magnitude of the jerk or, more specifically, the magnitude of the third time derivative of the moment of inertia of the mass squared, determines the magnitude of the generated GW determined, for example by a quadruple approximation as reported in textbooks on General Relativity. The force energizing mechanism can be a particle beam. The particle-beam frequency is that resulting from chopping the particle beam into bunches. The magnitude of the GW power is approximately proportional to the square of the kernel according to the general theory of relativity as discussed for instance in patent U.S. Pat. No. 6,417,597.

US Pat No. 6,784,591 describes a generator of GW based on submicroscopic energizable elements that does not employ the amplification techniques that are disclosed by the present document.

SUMMARY OF THE INVENTION

It is an object of the present invention to improve the prior art.

According to a first aspect of the present invention, there is provided a use of a high vacuum chamber as an amplifier of a gravitational wave.

Further details according to the first aspect may be as follows:

The pressure in the high vacuum chamber may be below $10^{-3}$ mbar.

The ratio of a wavelength of the gravitational wave by a length of the amplifier in a propagation direction of the gravitational wave may be between $10^8$ and $10^{16}$ wavelengths per meter.

The amplifier may amplify the gravitational wave by a factor of 10 and $10^8$ per meter of the amplifier in a propagation direction of the gravitational wave

The high vacuum chamber may have a length between 0.5 and 1000 meter in a propagation direction of the gravitational wave.

A non-linear material for the gravitational wave may be disposed in the high vacuum chamber.

According to a second aspect of the present invention, there is provided a device for generating a gravitational wave, comprising a generator of an external energy; a primary vacuum chamber with window transparent for the external energy; a first vacuum pump connected to the primary vacuum chamber and configured to evacuate the primary vacuum chamber; a converting material for converting the external energy into a gravitational wave, the converting material being disposed inside the primary vacuum chamber such that the external energy illuminates the converting material; a second vacuum chamber used as an amplifier of the gravitational wave according to the first aspect of the invention; and a second vacuum pump connected to the second vacuum chamber and configured to evacuate the primary vacuum chamber.

Further details according to the second aspect may be as follows:

The converting material may be excitable into an excited state by the external energy, wherein the excited state comprises a first oscillator of a first characteristic frequency comprising a mass and emitting the gravitational wave, and a second oscillator coupled with the first oscillator, and wherein a characteristic frequency of the second oscillator is smaller than the first characteristic frequency.

The first oscillator may be not electrically charged.

Each of the first and the second oscillator may comprise a subnuclear structure.

The material in a state other than the excited state may comprise a stable or metastable nucleus, and the external energy may include at least one of an electromagnetic wave and an elementary particle.

The electromagnetic wave may comprise at least one of X-ray and gamma ray, and wherein the elementary particle may comprise at least one of a neutron, a proton, an electron, a positron, and an antiproton.

A number of protons in the nucleus may be between 90 and 125.

The converting material may comprise Gadolinium.

The first oscillator may be one of a superconducting electron pair and a crystal or molecular excitation in a frictionless paired state, the second oscillator may be one of a molecular structure, an atom, and a crystal lattice, and the external energy may be at least one of an electromagnetic excitation, a thermal excitation, and an acoustic excitation.

The first and the second oscillator may be coupled by at least one further oscillator.

It is to be understood that any of the above modifications can be applied singly or in combination to the respective aspects to which they refer, unless they are explicitly stated as excluding alternatives.

Further details, features, objects, and advantages are apparent from the following detailed description of the preferred embodiments of the present invention which is to be taken in conjunction with the appended drawings, in which

Fig. 1 represents a detailed description of the nuclear model and the dynamical model;

Fig. 2 shows an apparatus for generating and amplifying gravitational waves.

FIG. 3 shows another apparatus for generating and amplifying gravitational waves; and

FIG. 4 shows still another apparatus for generating and amplifying gravitational waves.

DETAILED DESCRIPTION OF CERTAIN EMBODIMENTS

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

In a gravitational wave generating device, a material may be used in which external or internally produced energy is transferred from a main oscillator to other oscillators with different resonant frequencies coupled one another and with the main oscillator. Because of the interconnected cascade of oscillators and possible non linear coupling, the efficiency of the gravitational wave emission can be greatly increased.

At the atomic and subatomic scale, it is well known that all material particles may have mass or, alternatively, a combination of mass and electric charge.

Using particles with mass and charge, like protons, it is possible to excite those particles with external energy, like lasers and/or particle beams or with internal energy, like a chemical or nuclear reaction. As a consequence of the excitation the particles emit electromagnetic waves as a function of acceleration and emit gravitational waves as a function of the derivative (change in time) of acceleration, named jerk. Therefore the higher the frequency the higher is the emission of gravitational waves compared to the emission of electromagnetic waves. Because of the weakness of gravity with respect to electromagnetism, it is known from theory (Halpern and Laurent) that the emission of electromagnetic waves overwhelms the emission of gravitational waves in most, if not all, known situations.

For generating gravitational wave, the ideal approach is to use emitting particles that have large mass and no electric charge, they are neutral particles like neutrons, neutrinos, etc, they will emit gravitational waves and will not emit electromagnetic waves.

A method is disclosed that permit to put in motion massive neutral particles coupled to electrically charged particles with a great additional increment of the frequency, therefore obtaining an upgeared converter, which increases the emission of gravitational waves by many orders of magnitude respect to a direct, non upgeared, converter.

In addition to the above embodiment the disclosed concept includes all systems of coupled oscillators that are intended to emit gravitational waves using the same principles.

An embodiment of the invention relates to the generation and amplification of gravitational waves that can be modulated, directed, collimated and focused to be utilized for communications, space propulsion, air propulsion, near-ground propulsion, marine propulsion, sub-marine propulsion, through earth digging, material processing nuclear processes, including igniting nuclear fusion for energy production, testing physical-cosmological concepts and conjectures. More particularly an embodiment relates to the generation of gravitational waves (GW) by the interaction of elements (molecules, atoms, nuclei, nuclear particles, electrons, photons, antiprotons, etc.) through a dynamical process in which the different elements exchange energy through a process in which the final emitter of GW reaches a frequency higher than the input frequency or the frequency of the energy internally generated by the internal energy source, thus improving the emission of GW to a level that make this emission useable for practical applications. Because the improvement according to the embodiment may be over 20 orders of magnitude ($10^{20}$) with respect to previous techniques, the present invention is critical for the practical use of GWs.

An embodiment also relates to the use a non-linear solution of GWs propagation to obtain an amplification of the GWs produced by the above described generator to reach the amplitudes required for the cited practical applications. The present invention adopts two additional methods of amplification, one is the Holonomy, spin-orbit coupling, that realizes what is already known as parametric amplification using non-linear dynamics of coupled oscillator, the other is the non-linear dynamics of GWs themselves that is a consequence of General Relativity (GR) the best model of gravity developed till now. The amplification can be obtained by a tube or box in which a high vacuum is present to permit the undisturbed non-linear growth of the GW.

According to an embodiment of the present invention it is provided the generation of gravitational waves (GW) caused by the interaction of submicroscopic (molecules, atoms, nuclei, nuclear particles, electrons, alpha particles, neutrons, dineutrons, photons, etc.) energizing and energizable elements, nuclear cycles including instability cycles, chaos bifurcations, holonomy processes and non linear processes, in which a cascade of energy transfers ends on electrically neutral elements that emit the gravitational waves. This is the first generations and amplification mechanism. An embodiment includes a non linear propagation mode for gravitational waves that can provide further amplification of the amplitude of the wave. The combination of the different contribution enables reaching the amplitudes required for practical applications.

The weak point of all traditional approaches of generating gravitational waves is that the emitting system, whatever it is, operates at the same frequency of the excitation energy. The end result is that the frequency of the emitted GWs is twice the frequency of the excitation energy and the conversion efficiency is extremely low. For instance, for an electro-magnetic (EM) to GWs converter (Pinto and Rotoli, 1988), no practical cavity can have a sufficiently high Q or can host an EM field strong enough to produce detectable GWs according to traditional generator and detector configurations. Going back to the elementary basic formula of the power P emitted with gravitational waves by a "rod" with mass $m$, length $L$, rotating $\omega$ times a second, we have:

$$P = \frac{2}{45} \frac{m^2 L^4 \omega^6}{(c^5/G)}, \qquad\qquad (1)$$

where $c$ is the speed of light and $G$ is Newton's gravitational constant. In some embodiments we achieve that the power of gravitational waves excited is at the highest possible frequency, with the goal that future gravitational wave optics will permit collimation and focusing for technological applications (Baker, 2005) in which those parameters are most relevant.

Looking at the formula we observe that for identical systems, the power emitted is proportional to the sixth power of the frequency. Therefore a "gear-up" mechanism between electromagnetic excitation and the "rod" is what is required to increase the power emitted in GWs. Frequency multiplication can be obtained by using "gearboxes" like those we use in cars. Nano-mechanical gearboxes could be made, but all of them still have electromagnetic coupling at the "fast" pinion, and they need a torque reaction coupling to operate. Both limitations need to be addressed to define a new converter that is highly efficient and capable of enabling new technologies.

The main requirements for such an elementary converter are:

1. Small size and highly reproducible structure with highest possible operating frequency leading to GWs,

2. Nuclear density GWs emitter for best impedance matching to space-time,

3. Capability to be used in large numbers and in synchronized modes,

4. High frequency multiplication ratio,

5. Electrically charged low frequency interface for easy energization,

6. Electrically neutral high frequency interface to avoid re-emission of EM waves,

7. Massive and with high gravitational quadrupole moment high frequency interface for GWs emission,

8. Capability to be used without external torque reaction (it should be based on autonomous coupled oscillators and spin-orbit coupling).

The requirements point to nuclear or molecular systems as the preferred choice. We therefore recall that the spheron model of the nucleus (Pauling, 1965) may suggest that some nuclei do indeed provide the full spectrum of features that is required to practically build an efficient EM to GWs converter. The spheron model of the nucleus has been proposed by the two times Nobel Laureate Linus Pauling in 1965 (Pauling, 1965) as a simple model capable of explaining many properties of the different nuclei. The spheron model was proposed after the drop model and the shell model and is probably the most practical and intuitive model of the nucleus capable of producing realistic predictions as an alternative to brute force quantum mechanical calculations.

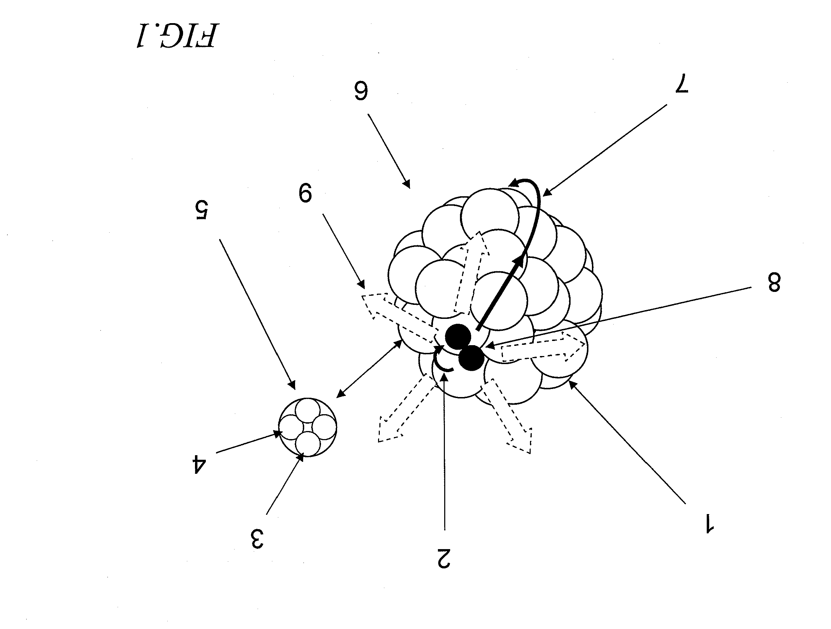

Figure 1 represents a detailed description of the nuclear model and the dynamical model. Reference number **6** indicates the core of the nucleus that is composed by one or more spherons **1** and **5**. Each spheron can be a proton, a neutron, a dineutron **8** a triton or an alpha particle like in the specific spheron **5**. The alpha particle $\alpha$ is composed by two neutron **3** and two protons **4**. In the discolsesd invention the dineutron **8** orbits on the surface of the core of nucleus along an orbit **7,** the dineutron **8** orbits and spins **2** around its own axis producing gravitational waves **9**. Those subnuclear elements can be present as a real particle or as a hole for the device to operate properly.

The spheron model is characterized by clusters of protons and neutrons in the nucleus named spherons, that are alpha particle (helions), tritons and dineutrons: they are aggregates of protons and neutrons in localized 1$s$ orbitals. Spherons may be present in the nucleus as "particles" and also as "holes".

Pauling shows that concentric layers of spherons allow the simple derivation of a subsubshell occupancy diagram and explanation of magic numbers (Pauling, 1965). The effective existence of dineutrons was discussed by Kamal and Parker (1991) and other authors with the clear conclusion that dineutrons are real objects.

Two qualities of the spheron model are of great relevance for GWs generation. The first one is that heavy isomers with high angular momentum are represented by a central core with magic number of protons and neutrons that does not rotate plus one or more spherons orbiting the core (Pauling, 1990). As the dynamics is driven by the strong nuclear force, the process is a proper gliding in an orbit. In one of his papers Pauling also suggests that $^{204}_{80}\text{Hg}_{124}$ has an $\alpha$ particle hole revolving in the sphere of the doubly magic $^{208}_{82}\text{Pb}_{126}$, and $^{206}_{82}\text{Pb}_{124}$ has a dineutron hole revolving in the sphere (Pauling, 1990).

The second quality of the spheron model is that each orbiting spheron may have its own rotational state that can be excited while gliding the magic number core. This is relevant if the spheron is a dineutron. In fact the dineutron obviously has nuclear density, it is electrically neutral and the two magnetic moments of the component neutrons are antiparallel, making it an ideal emitter of GWs, possibly the best microscopic emitter found so far.

Quantum mechanical analysis of nuclei is simpler for nuclei with less than ten nucleons, and various efforts are ongoing to produce detailed models. Itagaki et al. (2002) have studied the nuclear configuration of $^{10}\text{Be}$, that has a couple of neutrons orbiting the $\alpha$-$\alpha$ core; a lower energy state is found that has a bound neutron $n$-$n$ (dineutron) structure orbiting the core, a higher energy state has the two neutrons separately orbiting the core in opposite directions (see page 044302-4 of Itagaki, 2002). Modem quantum mechanical analysis confirms the Pauling's view about the existence of nuclear substructures (Pauling, 1990). Nuclear substructures clearly have a rich dynamics and with our interdisciplinary view, we recognize that the dineutron rotational state excited by its orbital angular momentum around the core may enable a very efficient mechanism for the generation of GWs. Energy is transferred from orbital motion to the spin of the dineutrons by relativistic spin-orbit coupling. The interaction is mostly dynamical in nature, not involving nuclear reactions, and following the rules of nonlinearly coupled dynamical systems.

If the excitation energy is external, it can be a particle and/or electromagnetic and/or gravitational radiation that hit the nucleus and make it oscillate at some frequency; as a consequence the dineutron/s orbit the nucleus and also spins at a much higher frequency respect to the excitation one. As the emission of gravitational waves if proportional to the sixth power of frequency there will be a great increase in emitted power. Being electrically neutral the dineutrons will not emit electromagnetic waves.

By adopting a collection of converting nuclei excited by coherent radiation a beamed coherent emission is possible, with additional gain due to coherence.

If the excitation energy is mostly internal, an external trigger particle, for example a proton is injected in the selected nucleus. According to theoretical analysis by Binder (2008), some heavy nuclei can enter a regime of dynamical instability related to chaos by a small increase of proton number Z; let's choose for example, but not limited to, Z=115. With the additional proton Z=115 may become a nucleus in the range Z=116, entering a region of instability, becoming unstable and highly energized trough Zero Point electromagnetic Fluctuations (ZPF). Afterwards a proton of the nucleus becomes a neutron plus a positron, following the usual beta+ decay channel. The positron is emitted and the neutron participates to the efficient emission of Gravitational Waves like we have in the externally excited converter. The emission of Gravitational Waves de-energizes the nucleus, the neutron is then released and the nucleus is ready for another cycle.

A vacuum enclosure permits further amplification because of non-liner phenomena related to Gravitational Waves, as determined by Fontana (2008).

A material according to an embodiment comprises one or more sets of coupled oscillators. Each set has a low frequency mode, which is excited/depleted by internal or external energy or by the high frequency mode, and a high frequency mode that is excited/depleted by internal energy, external energy or by the low frequency mode, being this last one the most relevant excitation path. The low frequency mode may couple to all known forces and fields to some degree, the high frequency mode couples mostly only to Gravitational Waves.

With external excitation an embodiment operates as converter from electromagnetic waves (EMW) to Gravitational Waves (GW); with internal excitation an embodiment operates as a generator of Gravitational Waves.

The invention is based on interdisciplinary application of nuclear dynamics within the Spheron model of the nucleus, non-linear dynamics of coupled oscillator, parametric amplification, holonomy, holonomy and nuclear instability in chaos theory, non-linear propagation of Gravitational Waves. It is based on the mainstream theories and on nuclei, nevertheless the same principles may be applied to similar systems of different nature like paired electrons in crystals, superconductors, polarons and other excitations in the solid state or plasmas that could manifest properties that may allow the here described phenomena to manifest as described in this document.

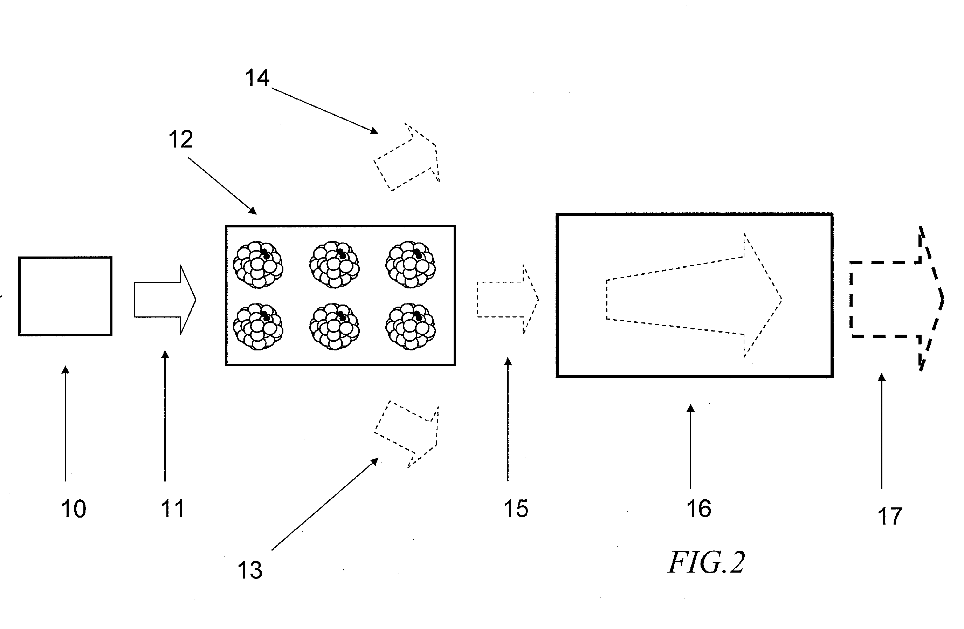

**Figure 2** shows a device for generating GW according to an embodiment of the present invention. The target plurality of nuclei **12** is excited or driven into instability by an external wave or exciting particles **11** produced by the generator **10**. The gravitational wave generating material **12** produces gravitational waves **13, 14, 15**. The gravitational wave **15** is amplified by the gravitational wave amplifying device **16** and emitted as high amplitude gravitational wave **17**.

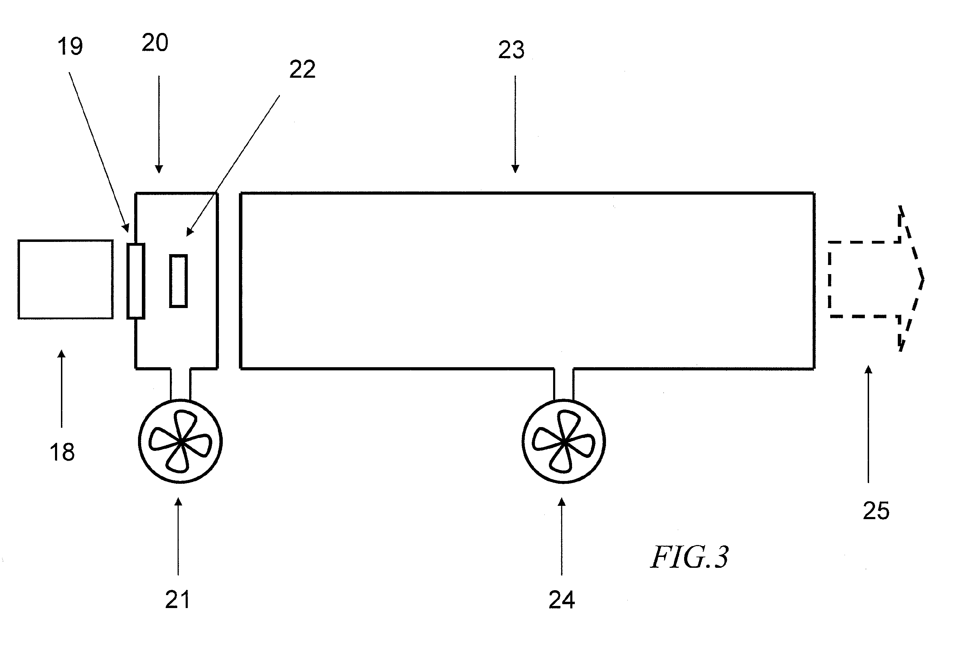

More details of such an embodiment are shown in **Figure 3.** In the embodiment, an X-ray laser **18** sends a beam of X-ray electromagnetic radiation through an X-ray transparent window **19** inside a primary vacuum chamber **20** evacuated by the vacuum pump **21**. The X-ray illuminates the converting material **22** that as a consequence produces the gravitational waves. Gravitational waves enter the second vacuum chamber **23** whose pressure and/or gas content can be controlled by pump **24**. amplified gravitational waves **25** are emitted along the main axis of the vacuum chamber **23**. The selection of the window material of the second vacuum chamber is not critical because many known materials are transparent to gravitational waves.

The pressure in the primary and second vacuum chamber is below $10^{-3}$ mbar, preferably below $10^{-6}$ mbar, more preferably below $10^{-10}$ mbar. The x-ray energy is between 0.1 and 120 keV, preferably between 1 and 100 keV, more preferably between 30 and 70 keV.

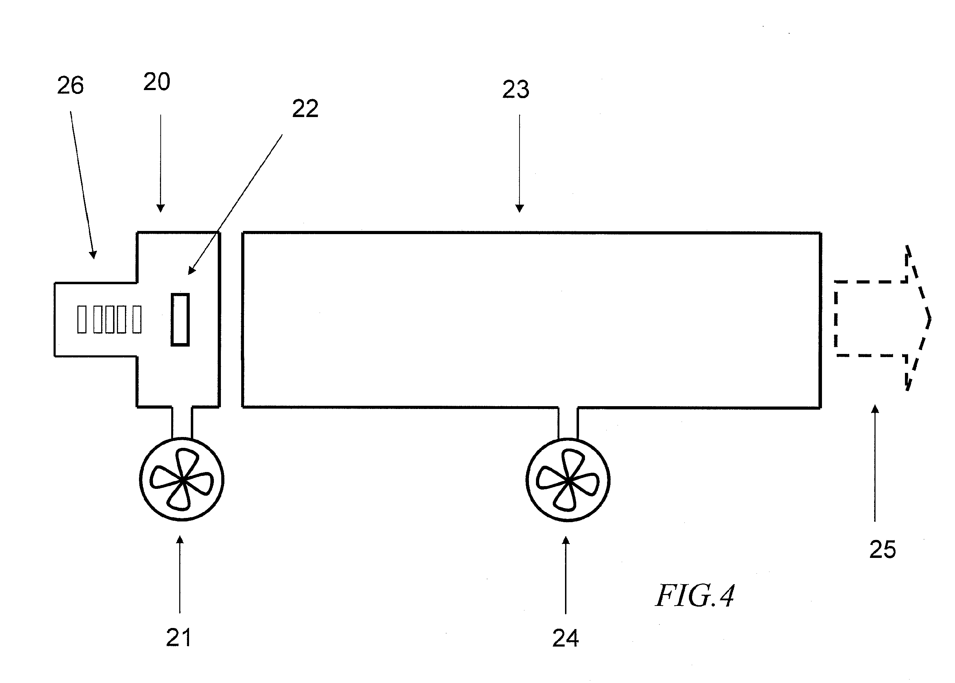

**Figure 4** shows another embodiment. Compared with the embodiment of Figure 3, the X-ray laser is replaced by a particle accelerator 26 which is in the same vacuum chamber as the converting material 22.

According to Binder (2008), that determined some general rules for spin-orbit coupling in nuclei, the spinning frequency of the dineutrons is about 8939 times higher than the excitation frequency of the core of the nucleus. The frequency ratio between electromagnetic waves and emitted Gravitational Waves is 2*8939=17878 times higher than the excitation frequency of the core of the nucleus. Thus we have defined a $8939^{GW}/1^{EMw}$ converter. According to the calculations of Halpern and Laurent (1964) The net gain in power emitted respect to a traditional $1^{GW}:1^{EMW}$ converter is therefore $8939^6=5*10^{23}$, with an additional gain of $2*10^7$ that can be obtained by a synchronized operation of coherent oscillators or by a high Q resonator, the unitary energy balance and 100% conversion efficiency, can be obtained. Please observe that the energy balance for the $1^{GW}:1^{EMW}$ converter is $10^{31}$ in favor to the electromagnetic interaction, which means that with the $1^{GW}:1^{EMW}$ converter a "graviton" is emitted every $10^{31}$ "photons" as described by Halpern and Laurent (1964). Instead with the disclosed invention $8939^{GW}/1^{EMw}$ converter, a "graviton" is emitted every $2*10^7$ "photons".

An ensemble of $2*10^7$ or more nuclei is required to operate with unitary (100%) conversion efficiency, that is about fractions of a picogram of a suitable element. According to Pauling and the periodic table of the elements a suitable element could be Gadolinium.

Coherent emission is possible by exciting the nuclei with coherent radiation, for instance in the X-ray frequency range and letting the stimulated emission of GW to build-up as described by Halpern and Laurent (1964). Frequency multiplication in non linear coupled oscillators can be described as follows:

SPINNING AT HIGH HARMONIC FREQUENCIES IN NUCLEAR APPLICATIONS

Rolling, gliding, and revolving in the sphere provides for holonomy effects. In classical mechanics we have holonomy effects (Marsden, 1973), especially if the solid-body rotation angle is connected to the actual solid angle that the body-fixed axis describes as the body performs a conical motion (Ishlinskii, 1952, Malykin, 1999). There are mechanical toys modeling the dynamics of spin-precession coupling: the function of the Gyrotwister or Powerball (Mishler, 1973) is based on a mechanical gear-type coupling between precession and spin phase: if the spin axis rolls in the bearing (on the rim of the groove by friction) and the device has enough spin, the onset of linear spin-precession coupling enables to control spin by precession. If the conic motion of the external stimulation is such, that the number $N$ of axis rotations for one precession period is reduced by $j$, the device auto-tunes recurrently and follows the external holonomy change. Now it can be powered-up to high spin frequencies with precession frequency multiplier $N/j$. Near dynamic equilibrium we get curves of constant precession (Darboux) in the Frenet description, which are rolling cone paths showing the dynamics of a precession axis pendulum.

"Magic Angle Precession" (MAP) (Binder, 2008) describes a special chaotic behavior in the precession angle of a precessing rotor (gyroscope), where the rotor angular velocity is linearly coupled by (an)holonomy to the precession angular velocity and angle. In the mechanical picture a linear coupling between spin and precession angular velocity provides for rolling cone paths and allows spinning up and controlling the rotor simply by forcing precession at special quantum magic precession angles. The principle can be experimentally verified with devices, where spin and precession of a rotor are coupled by a conic rolling mechanism. This linear relation models a recurrent chaotic holonomy, where precession as the effect of holonomy is also a cause of holonomy linearly related to the rotator spin. Gravitational waves can be regarded as a modulated holonomy signals obeying a hyperbolic wave equation. In a more recent approach, it is shown that a pure geometric attractor can promote a local hyperbolic (vortex) geodesic flow on a rotating spherically curved surface, where the vortex angular velocity is considerably higher than the angular velocity on the sphere (Binder, 2008). Here, we regard an ideal system of rotated rotations, where spherical harmonics store angular momentum while hyperbolic harmonics (traveling waves) extract or support angular momentum. Due to different curvature signs we have at the boundary a holonomy discontinuity, which could provide from a signal theoretic point of view for impedance jumps capsulating the spherical harmonics and reflecting external waves.

From referenced papers we know about magic angle precession constellations reducing the mismatch to zero and allowing for a lossless external angular momentum exchange. At special precession angles it is possible to inject and extract angular momentum from precession to and from the rotor spin, allowing spinning up the rotator to very high frequencies controlled by a slow precession frequency. Due to the apparent coupling between spin and precession it is a strictly nonlinear dynamics supporting fast auto-tuning and self-stabilization capabilities. The recurrent situation balances the linear coupling by a transcendental holonomy spin coupling effect. The emerging magic precession/nutation angle/phase patterns are singularities given by the intersections between linear and transcendental couplings. Near these points very strong and lossless angular momentum currents crossing the boundary between hyperbolic precession space and the spherical rotator space are observed. The strange attractor balancing the linear and holonomy spin-currents living on the tangential cone connects the sphere with the hyperbolic space, where the resulting precession or twister dynamics can be modeled.

With synergetic effects given by a neural-type recursive network based on coupled MAP elements, a strong long range spin-network synchronization dynamics should be possible (Binder, 2008). It has been proposed that this holonomy attractor could integrate a large number of quantum spins from Hopf fibrations and correspondent magnetic monopoles into one global higher-dimensional spin, where the local coupling network provides for electroweak and strong interactions (Binder, 2008).

With three or six MAP elements we get a rational exact solution without chaotic transcendental part and SU(3) symmetry, where the Dirac monopole charge condition $NM = \pm 1/\alpha$ fits very well to $Z = j/J = \pm 1/3, \pm 2/3$, the quark charge (Binder, 2008). This spin has some serious support in literature (Franklin, 1969). Finally, more complex networks near $Z$=115 could explain the heavy nuclei instability (Binder, 2003, 2009).

With the support of the Spheron model and MAP dynamics it is possible to identify a nucleus that could convert EMW radiation to GWs with high efficiency such as nuclei with a heavy core with highly relativistic dineutrons capable of strong spin-orbit coupling.

In the following analysis we compare the GWs emission properties of dineutrons dynamically coupled to a suitable core to a similar (according to Equation 1) GWs source that is the deuterium nucleus. The dineutron will be coupled to the electromagnetic field via the core and MAP dynamics, the deuterium nucleus will be directly coupled to the electromagnetic field.

NON LINEAR DYNAMICS OF DINEUTRONS

After recognizing that a nuclear model is suitable for producing GWs through angular frequency high order harmonics interplay between a charged body (the core) and an electrically neutral "dumbell" (the dineutron) a quantum mechanical relationship between the two frequencies, applicable to heavy nuclei, must be found. At STAIF 2008 Bernd Binder described MAP (Magic Angle Precession) dynamics for nuclei (Binder, 2008). The study of MAP dynamics applied to nuclei has provided values for some critical parameters capable of describing the efficiency of the EMW to GWs converter. Bernd's analysis is a powerful tool that we here apply to the spheron - core/dineutron model of suitable nuclei. The method involves non-linear dynamics of coupled oscillators. Coupled oscillators with non-linear terms exhibit a complex dynamics that goes from "regular motion" through "star patterns" to "chaotic motion" as a function of excitation energy. The "start pattern" dynamics is very peculiar for our approach because energy goes back and forth from a high frequency oscillation to a low frequency oscillation on different linear combination of physical coordinates. The model has widespread applications, for instance Earth atmosphere may be modeled by such a system of coupled oscillators (Lynch, 2002). Energy transfer between modes is also an example of parametric amplification and de-amplification. In such case the traditional approach is based on the Manley and Rowe equations (Brown, 1965). With a set of frequencies in the source and in the sink written as $f_{mn}=mf_1+nf_2$, with $m$, $n$ integers and $f_2/f_1$ irrational, being $P_{mn}$ the power at $f_{mn}$, positive if it enters the system and negative if it leaves the system, the Manley-Rowe equations are:

$$\sum_{m,n} \frac{mP_{m,n}}{mf_1 + nf_2} = \sum_{m,n} \frac{nP_{m,n}}{mf_1 + nf_2} = 0 \qquad (1)$$

As a particular case, if two oscillators at frequency $f_0$ and $Nf_0$, where $N$ can be irrational, are coupled by a non-linear non-dissipating element, such as a non-linear elastic constant, it is possible that energy goes from one oscillator to the other periodically, the direction of the energy transfer depends on the phase relationship between the phase of the higher frequency oscillator and the respective harmonic of the lower frequency oscillator, a changing phase is determined by the fact that N can be irrational, i.e. it is the nearest rational number plus a small irrational frequency difference (a changing phase). This is what Lynch describes as the star-pattern phenomenon. It is a form of degenerated parametric amplifier in which the mode at $f_1$ amplifies the mode at $f_2$ at the expense of its own energy, until is completely depleted, then the energy flows the other direction if no other mechanism can remove it. Usually, the physical coordinates of the system are linear combination of the orthogonal coordinates of the two modes. With higher initial energy the same system may enter the regime of chaotic motion. Chaotic motion is usually disruptive for nuclear systems because as soon as some binding energies are overcome the nucleus is interested by fission, which destroys the mechanism.
Another interesting example of parametric coupling applied to gravitating systems is satellite librations (Klemperer and Baker, 1957), in this case the time-scale of the phenomenon is much longer.
As soon as a dynamical system exhibits these properties (like non-linear or relativistic spin-orbit coupling), the periodic energy exchange takes place. In suitable nuclei, when energy peaks on the high frequency spinning dineutron, it can be emitted as GWs. The emission of a quantum of GWs removes power from the system and a new cycle can begin, thus partially depleting the "star pattern", whose dynamics do indeed operate to keep the system synchronized. If energy input is kept below some threshold, the converter can safely operate. With Binder's notation, parameter $N$ is the integral number of nutations, or orbital waves (dineutron rotations on its axis) for one rotation of the base plane (one glide-orbit around the core, induced by EMW excitation of the core). Analyzing the Sommerfeld spin-orbit fine structure coupling conditions for $M$=137, best fit is obtained by averaging results with N about equal to 8939. $N$=8939 has been primarily applied to the numerical study of heavy nuclei bifurcation (Binder, 2008). For the analysis of the "gear up" mechanism in heavy nuclei we adopt $N$=8939 as gear ratio i.e. the "frequency ratio", an addition factor of 2 is required for the GWs frequency.

ESTIMATION OF THE CONVERSION EFFICIENCY

To estimate the conversion efficiency of the arrangement, the nucleus can be treated like a quantum system for which a ratio $r$ between the emission probability for gravitons and photons from equal structures can be computed. Halpern and Laurent computed in their seminal paper (Halpern, 1964) the above mentioned ratio for electrons $r \sim 10^{-43}$, for protons $r \sim 10^{-36}$, and for larger molecular structures or heavy nuclei that are only slightly ionized $r \sim 10^{-31}$.
If we introduce the concept that the EM excitation frequency is lower than the frequency of the high frequency GWs (HFGW) emission and the HFGWs emitting subsystem is "geared-up" by an electrically neutral mechanism, according to equation (1) $r$ is increased by the sixth power of the frequency ratio, that is $8939^6=5*10^{23}$. Therefore for heavy

nuclei that are only slightly ionized and for which the MAP coupling effect ends on neutron structures $r{\sim}5{\cdot}10^{-8}$.

To increase the interaction of the nucleus with the EMW field without affecting the emission of GWs, it is possible to adopt an EMW resonator tuned on the EMW absorption frequency of the nucleus. In an embodiment, a superconducting cavity with $Q=2{\cdot}10^7$, capable of accumulating energy till dissipation makes it leak to the external environment, makes unitary, which is the goal of any efficient converter from electromagnetic radiation to GWs. High power superconducting cavities with intrinsic Q exceeding $10^{10}$ are described by Padamsee, 2005, therefore nuclei designed to provide MAP coupling effect to dineutrons are excited with EM waves obtaining nearly complete conversion of EM energy to GWs. In some other embodiments photons may interact with sequences of many converting nuclei, to enhance the conversion probability, see Fontana and Baker (2006). In an embodiment, the traveling-wave converter is designed to perform coherent conversion, thus maintaining the spatial and temporal coherence of the EM excitation, mimicking the operation of non-linear crystals employed for optical frequency multiplication of Laser light. Discrepancies between the phase velocities of the two kinds of radiation are minimized by the geometry of the converter (Fontana and Baker, 2006).

The process can be described as a continuous excitation of the rotational state of the dineutron; alternatively it can be described as a transition to a higher energy state with unbound neutrons to a lower energy state with bound neutrons (pairing-condensation) (Itagaki et al., 2002).

ESTIMATION OF THE MAXIMUM OUTPUT POWER

In this section the maximum permissible output power in GWs per unit of converting material is estimated under a number of reasonable conditions. In an embodiment analyzed herinafter the dineutrons do not dissociate, therefore no nuclear reaction takes place. The estimate will be based on maximum centrifugal force counteracted by the strong nuclear force to determine the maximum angular velocity and therefore the power emitted in GWs. The classical approximation should be sufficient for an order of magnitude estimate. In some embodiments, the power is limited without overcoming the limit. Overcome the limit is possible by the usual fission phenomenon.

The measured binding energy of the deuteron nucleus is 2.226 MeV, for dineutrons the binding energy depends on the structure of the $\alpha$-cluster core, because no binding is possible in isolated n-n systems. The early calculations made by Pauling himself give values of about 1.4 MeV (Pauling, 1967) for dineutrons belonging to heavy nuclei. The distance between the two neutrons of the couple is 2-3 fm, as reported by recent studies in neutron rich light nuclei (Kanada-En'yo, 2007), which also suggest that the $\alpha$-cluster core is a Bose condensate of $\alpha$-particles, the same kind of condensation apply to dineutrons for nuclei that have more than one dineutron orbiting the core. Adopting equation 1, the maximum power emitted by a single dineutron as GW is of the order of $10^{-33}$ W at frequencies of the order of $10^{22}$ Hz, that belong to the $\gamma$-ray region of the spectrum. A kilogram of dineutrons consists of $N{\approx}3{\cdot}10^{26}$ dineutrons and the power emitted with incoherent summation (only applicable to spontaneous emission) is of the order of microwatts. In an embodiment with coherent amplitude summation is possible, the (Number of Emitters)2 factor pushes the maximum power to about $10^{20}$ W per kilogram of dineutrons, therefore the converter produces powerful beams of GWs according to the degree of coherence that can be achieved experimentally and the geometric configuration of the converter. The effective output power will be obviously less than the input power, that for the internally energized converter, includes Zero Point electromagnetic Fluctuations (ZPF).

The here presented concept of EM wave to GW converter with high order harmonic generation exploits the quantum relationship between the frequency excitation of EM energy and the frequency of the generated GWs. The process can be made coherent for GW output, with space and time coherent excitation in the X-ray region of the EM spectrum. In an embodiment, the excitation system is an X-ray laser.

If the excitation energy is mostly internal, with an external trigger particle, for example a proton, which is injected in the selected nucleus, some heavy nuclei can enter a regime of dynamical instability by a small increase of Z, let's choose for example, but not limited to, Z=115. With the additional proton Z=115 may become a nucleus in the range Z=116, entering a region of instability, becoming unstable and highly energized trough Zero Point electromagnetic Fluctuations (ZPF). Afterwards an energetic proton of the nucleus becomes a neutron plus a positron and a neutrino, following the usual beta+ decay channel. The positron and the neutrino are emitted and the neutron participates to the efficient emission of Gravitational Waves like we have in the externally excited converter. The emission of Gravitational Waves de-energizes the dineutron, the neutron is then released according to the core/dineutron energy balance already disclosed, and the nucleus is ready for another cycle.

AMPLIFICATION OF GRAVITATIONAL WAVES

When a strong GW propagates undisturbed in high vacuum it may grow to higher amplitude because of the following considerations:

As a simple rewriting of the metric of a GW of General Relativity it is possible to show that Gravitation can be easily modeled by resorting to the analogy to optical propagation in a three-space and introducing a gravitational refractive index of the Hyperspace named $n$ (Almeida, 2001):

$$c^2(dt)^2 = n^2\left[(d\tau)^2 + (dx)^2 + (dy)^2 + (dz)^2\right], \quad n \neq 0, \tag{2}$$

after switching to spherical coordinates with $d\varphi=0$ and $d\theta=0$, writing $ds^2=n(d\tau^2)$ and substituting:

$$\frac{1}{n} = \left(1 - \frac{2Gm}{r}\right), \tag{3}$$

we find the Schwarzschild's metric of General Relativity (Almeida, 2001), with G the gravitational constant, $m$ is mass and $r$ distance. Therefore there exist a formal link between General Relativity and the Theory of Gravity for the Hyperspace that is called Four Dimensional Optics (4DO).

For the wave described by Equation (2), with $a<<1$ we express Equation (2) as:

$$c^2(dt)^2 = n_\tau^2(d\tau)^2 + n_x^2(dx)^2 + n_y^2(dy)^2 + n_z^2(dz)^2, \tag{4}$$

Comparing Equation (1) with Equation (4), it is obvious that the weak gravitational wave is a wave of refractive index of the Hyperspace, which propagates at the speed of light in four dimensions. More generally, assuming isotropic propagation, a generic wave equation for weak waves traveling at speed c can be written:

$$\frac{1}{c^2}\frac{\partial^2 n}{\partial t^2} = \nabla^2 n, \tag{5}$$

Equation (5) is characterized by time $t$ defined as an evolution variable as in the equations of electrodynamics and by having four space dimensions.

The linear wave Equation (5) can be integrated with results that will have integration constants. In fact in the flat background, the refractive index is unitary; this value must be added to the solutions of Equation (5). If the background value can be ignored in the derivatives, it must be included in the expression of speed. The nonlinear wave equation that includes the effect of the refractive index on speed is therefore:

$$\frac{(n+1)^2}{c^2}\frac{\partial^2 n}{\partial t^2} = \nabla^2 n, \tag{6}$$

whose nonlinear behavior expresses the non-linearity of gravitational waves (Christodoulou, 1991). The background value of $n$ must be added to the solutions of Equation (6).

Equation (5) has the usual wave solutions for any value of $n$, instead Equation (6) has the usual wave solutions if $n^2 <<1$.

The solutions for weak waves in a unitary background may come from separations of variables in spherical (hyperspherical) coordinates. Writing the solutions of Equation (5) in the form $n(r, t) = T(t)R(r)$, the individual equations are:

$$r\frac{d^2R}{dr^2} + (i-1)\frac{dR}{dr} + k^2 rR = 0 \, ; \qquad \frac{d^2T}{dt^2} + \omega^2 T = 0, \tag{7}$$

where $i$ is the space dimensionality of the problem, $k$ has units of 1/distance and $\omega$ has units of 1/time. With $i=4$, they are waves in four dimensions. Please note that with odd dimensionality ($i=1, 3, 5, ...$) the traveling wave solutions have speed $c$; instead for even dimensionality the traveling wave solutions have a spread of speeds from zero to a maximum (Brown, 2007). This last result applies to gravitational waves in the Hyperspace.

Qualitatively, according to Equation (6), if a beam of gravitational waves is more intense at the center respect to the periphery, then the central part of the beam travels at lower four-speed, leading to self-focusing, in agreement with the classical GW treatment of the problem (Corkill and Stewart, 1983; Ferrari, 1988).

The unitary background refractive index of Equation (6) needs some explanation as it could be attributed to a background gravitational wave that cosmologically supports our space-time. In fact removing the background the non-linear wave equation is:

$$\frac{n^2}{c^2}\frac{\partial^2 n}{\partial t^2} = \nabla^2 n \, , \tag{8}$$

Starting from the wave equation in $i$ space dimensions ($i=4$ for the Hyperspace) and adopting again $n(r, t) = T(t) R(r)$:

$$T\frac{d^2 R}{dr^2} + (\frac{i-1}{r})T\frac{dR}{dr} = R\frac{R^2 T^2}{c^2}\frac{d^2 T}{dt^2} \, , \tag{9}$$

we separate the variables:

$$\frac{1}{R^3}\frac{d^2 R}{dr^2} + \frac{1}{R^3}(\frac{i-1}{r})\frac{dR}{dr} = \kappa = \frac{T}{c^2}\frac{d^2 T}{dt^2} \, , \tag{10}$$

rewriting, the left hand equation is:

$$r\frac{d^2 R}{dr^2} + (i-1)\frac{dR}{dr} - \kappa\, r\, R^3 = 0 \, , \tag{11}$$

while the right hand equation gives:

$$\frac{d^2 T}{dt^2} = \frac{\kappa\, c^2}{T} \, , \tag{12}$$

that is a case of the Emden-Fowler (EF) nonlinear ordinary differential equation with $A=\kappa c^2$ (Sachdev, 1991). Equation (12) has no known explicit solution in the form $T(t)=f(t)$, instead it is possible to write:

$$t = \int\left(2A\ln T + C_2\right)^{-1/2} dT + C_1 \, . \tag{13}$$

With $\kappa\neq 0$, Equation (12) can be integrated numerically with the approximate result: $T(t)\approx C_1 + C_2 t^\alpha$, with $C_1$ and $C_2$ real constants and $\alpha$ slightly larger than 1 ($\alpha\approx1.03$). The solutions of Equation (11) are oscillating, while the solution of Equation (12) can be continuously increasing with time, which is the feature of our interest for amplification. Materials with nonlinear gravitational properties may enhance the amplification phenomenon.

With $\kappa \neq 0$, Equation (12) can be integrated numerically with the approximate result:

$$T(t) \approx C_1 + C_2 t^{\alpha},\qquad (14)$$

with $C_1$ and $C_2$ real constants and $\alpha$ slightly larger than 1 ($\alpha \approx 1.03$). The solutions of Equation (11) are oscillating, while the solution of Equation (12) can be continuously increasing with time, which is the feature of our interest for amplification.

Materials with nonlinear gravitational properties may enhance the amplification phenomenon.

For calculating the physical dimensions of the amplifier it is necessary to consider the effect of the nonlinearity of GW propagation on gravitons emitted by the converter and propagating in high vacuum. Considering the time component of the refractive index, we can put it in the Schwarzschild's metric obtaining:

$$\frac{1}{C_1 + C_2 t^{\alpha}} = \left( 1 - \frac{2Gm}{r} \right),\qquad (15)$$

In which the gravitational field associated to the wave is represented by $m$, which increases as time passes because the term in parentheses is positive when $t=0$.

With the proposed externally excited converter the reference peak power of the impulse is comparable to the peak power of the exciting X-ray laser and can be according to present technology about .6 MW at a typical wavelength of 47 nm. This power will be converted to gamma ray GWs by the converter at a typical wavelength of 5.2 pm by the N=8936 frequency relationship.

In an amplifier length of 1 m, the amplifier contains $1/5.2*10^{-12}$ wavelengths, that is $1.9*10^{11}$ wavelengths. More general, the ratio of the wavelength of the GW by a length of the amplifier in a propagation direction of the GW is usually between $10^6$ and $10^{20}$ wavelengths per meter, preferably between $10^8$ and $10^{16}$ wavelengths per meter. As $C_2$ of equation 14 represents the non-linearity of propagation in time and assuming an overall contribution of the order of $10^{-7}$ per wavelength for typical configurations, a high vacuum chamber with a 1 m length gives appreciable amplification of the order of $10^4$, or more general of 10 to $10^8$, preferably between $10^3$ and $10^8$.

In some embodiments, the amplifier may have a length between 0.5 and 1000 meter.

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

Hereinafter is a short summary of the most important features relevant for generating gravitational waves according to some embodiments of the present invention:

A Gravitational Wave Generating device comprising:

One or a plurality of dynamical systems, each composed by two or more coupled oscillators with different characteristic frequencies. One of the oscillators is coupled to input energy and another emits Gravitational Waves, and a device for sending electromagnetic waves or excitation energy to the low frequency oscillator.

A method for avoiding the emission of electromagnetic energy from the high frequency oscillator by using electrically neutral and massive emitting particles, thus promoting the emission of Gravitational waves.

An amplification stage composed by a volume of ultra high vacuum and/or non-linear material for enhancing and/or guiding non-linear propagation and amplification of gravitational waves.

An optional excitation/triggering stage applicable to some specific oscillators near the chaotic instability region.

An optional particle accelerator to cycle the oscillators through the instability region.

A device in which the coupled oscillators are subnuclear structures like spheron cores or central fraction of nuclei for coupling to external electromagnetic excitation and dineutrons for the emission of gravitational waves.

A device in which the oscillators are a stable or metastable nucleus that is made more unstable and/or excited by external energy.

A device in which the external energy is X-ray

A device in which the external energy is gamma-ray

A device in which the external energy is an elementary particle like a neutron, proton, electron, positron, antiproton or any subatomic particle.

A device in which the external energy is a generic electromagnetic wave.

A device in which, after the generation of a pulse of gravitational waves because the emitting nucleus has been hit the external energy, the nucleus returns to its original state.

A device in which, after the generation of a pulse of gravitational waves because the emitting nucleus has been hit the external energy, the nucleus does not return to its original state because of the nuclear reaction.

A device in which the coupled oscillators are molecular structures like atoms and/or crystal lattices for coupling to external electromagnetic excitation and superconducting electron for the emission of gravitational waves.

A device in which the coupled oscillators are molecular structures like atoms and/or crystal lattices for coupling to external thermal and/or acoustical excitation and superconducting electron for the emission of gravitational waves.

A device in which the coupled oscillators are molecular structures like atoms and/or crystal lattices for coupling to external electrical and/or thermal and/or acoustical excitation and crystal/molecular excitations in a frictionless paired state for the emission of gravitational waves.

A device in which a box with ultra high vacuum inside allows the amplification of the gravitational wave.

A device in which a box with non-linear material inside allows the amplification of the gravitational wave.

A device where the chaotic instability region is the Z=115 to Z=116 boundary.

A device where the chaotic instability region is the Z=X to Z=X+1 boundary. Where X is a number between 1 and 200.

A device where the chaotic instability region is the Z=X to Z=X+2 boundary. Where X is a number between 1 and 200.

REFERENCEES

**U.S. Patent Documents**

2719944 Oct., 1955 Brailsford 318/254.
2814769 Nov., 1957 Williams 318/171.
3612630 Oct., 1971 Rosensweig 308/10.
3667019 May., 1972 Elliott et al. 318/254.
3903463 Sep., 1975 Kanamori 318/138.
3959700 May., 1976 Sugiura et al. 318/138.
3970936 Jul., 1976 Arnold 455/899.
4035658 Jul., 1977 Diggs 290/55.
4052134 Oct., 1977 Rumsey 416/119.
4086505 Apr., 1978 McDonald 310/74.
4205268 May., 1980 Eerkens 455/899.
4546264 Oct., 1985 Pinson 290/54.
4968475 Nov., 1990 Drukier et al. 376/153.
5276717 Jan., 1994 Weber 376/156.
5398571 Mar., 1995 Lewis 74/572.
5446018 Aug., 1995 Takahata et al. 310/90.
5514923 May., 1996 Gossler et al. 310/74.
5646728 Jul., 1997 Coutsomitros 356/352.
5721461 Feb., 1998 Taylor 310/268.
5831362 Nov., 1998 Chu et al. 310/90.
5929579 Jul., 1999 Hsu 318/439. 6784591 Aug, 2004, Baker

**British Patent Documents**

1333343 Oct., 1973 GB

Other References:

Almeida, J.B., "An Alternative to Minkowski Space-time," (2001), v2, http://arxiv.org/abs/gr-qc/0407022, accessed July 16, 2004.

Almeida, J.B., "An Hypersphere Model of the Universe - The Dismissal of Dark Matter," (2004), v3, http://arxiv.org/abs/Physics/0402075, accessed July 16, 2004.

Baker, R. M. L., Jr., "Gravitational Wave Generator Utilizing Submicroscopic Energizable Elements," *United States Patent* Number 6,784,591, 100 claims, filed December 27, 2000.

Baker, R. M. L. Jr., " Precursor Proof-of-Concept Experiments for Various Categories of High-Frequency Gravitational Wave (HFGW) Generators," in proceedings of Space Technology and Applications International Forum (STAIF-2004) , edited by M. El-Genk, AIP Conference Proceedings 699, Melville, New York, 2004, pp. 1093-1097.

Baker, R.M.L. Jr., "Applications of High-Frequency Gravitational Waves," in proceedings of Space Technological Applications International Forum (STAIF 2005), edited by M.S. El-Genk, AIP Conference Proceedings 746, Melville, New York, 2005 pp. 1311-1314.

Baker, R.M.L., Jr., Davis, E.W. and Woods, R.C., "Gravitational Wave Radiation Pattern at the Focus of a High-Frequency Gravitational Wave Generator and Aerospace Applications," in proceedings of the Space Technological Applications International Forum (STAIF 2005), edited by M. S. El-Genk, AIP Conference Proceedings 746, Melville, New York, 2005, pp 1315-1322.

Binder, B., "Geometric Phase Locked in Fine Structure," in Iterative Coupling and Balancing Currents, e-Book, ISBN: 3-00-010972-2, (2003).

Binder, B., "Magic Angle Precession," in the proceeding of Space Technology and Applications International Forum (STAIF-08), edited by M. El-Genk, AIP Conference Proceedings 969, New York, (2008a), pp. 1103-1110.

Binder, B., "Magic Angle Chaotic Precession," in the proceedings CHAOS2008, Chania, Greece, (2008b).

Brown, J., "Proof of the Manley-Rowe Relations from Quantum Considerations," Electronics Letters, 1, 23-24 (1965)

Fontana, G. and Baker, R. M. L. Jr., "Generation of Gravitational Waves with Nuclear Reactions" in proceedings of Space Technology and Applications International Forum (STAIF-2006) , edited by M. El-Genk, AIP Conference Proceedings 813, Melville, New York, 2006, pp. 1352-1358.

Franklin, J., "Fermion Quarks of Spin 3/2", Phys. Rev. 180, 1583-1587, (1969).

Halpern, L., Laurent, B., "On the Gravitational Radiation of Microscopic Systems," Il Nuovo Cimento, XXXIII, N. 3, 728-751 (1964).

Kamal, S., Parker, B., "Evidence for Dineutrons in Extremely Neutron-Rich Nuclei," Physical Review Letters, 66, 2448-2451 (1991).

Klemperer, W. B. and Baker, R. M. L. Jr., "Satellite Librations," Astronautica Acta, 3, 16-27 (1957). Ishlinskii, A., "Mechanics of Special Gyroscopic Systems", Izd. AN USSR, 1952, Kiev.

Itagaki, N. et al., "Triaxial Deformation in 10Be," Physical Review C, 65, 044302-1 - 044302-6 (2002). Landau, L. D. and Lifshitz, E. M., The Classical Theory of Fields, Fourth Revised English Edition, Pergamon Press, 1975.

Li, F., Baker, R. M. L. and Fang, Z., "Coupling of an Open Cavity to Microwave Beam: A Possible New Scheme of Detecting High-Frequency Gravitational Waves," in the proceedings of Space Technology and Applications International Forum (STAIF-2007), edited by M. El-Genk, AIP Conference Proceedings 880, Melville, New York, 2007, pp. 1139-1147.

Lynch, P., "Resonant Motion of the Three-dimensional Elastic Pendulum," International Journal of Nonlinear Mechanics, 37, 345-367 (2002).

Malykin, G. B., "The relation of Thomas precession to Ishlinskii's theorem as applied to the rotating image of a relativistically moving body", PHYS-USP 42, 5, (1999).

Marsden, J. E., T. Ratiu, Introduction to Mechanics and Symmetry, Texts in Applied Mathematics vol. 17, Springer-Verlag, 1994.

Mishler, L.A. Gyroscopic Device, *United States Patent* 3,726,146, (1973).

Misner, C. W., Thome, K. S. and Wheeler, J. A., Gravitation, Freeman (1973).

Padamsee, H., "Accelerating Applications of RF Superconductivity - Success Stories," IEEE Transactions on Applied Superconductivity, 15, 2432-2439 (2005).

Pauling, L., "The Close-Packed-Spheron Model of Atomic Nuclei and its Relation to the Shell Model," Proc. Natl. Acad. Sci. USA, 54, 989-994 (1965).

Pauling, L., "Binding Energy of Dineutrons $N\approx90$," (1967), http://osufibrary.orst.edu/specialcollections/rnb/32/32-143.html, accessed June 4, 2008.

Pauling, L., "Orbiting Clusters in Atomic Nuclei," Proc. Natl. Acad. Sci. USA, 64, 807-809 (1969). Pauling, L., "Regularities in the Sequences of the Number of Nucleons in the Revolving Cluster for the Ground-state Energy Bands of the Even-even Nuclei with Neutron Number Equal to or Greater than 126," Proc. Natl. Acad. Sci. USA, 87, 4435-4438 (1990).

Pinto I.M. and. Rotoli G., "Laboratory generation of gravitational waves?," Proceedings of 8th Italian Conference on General Relativity and Gravitational Physics, Cavalese (Trento), August 30 - September 3, World Scientific (1988).

Christodoulou, D., "Nonlinear Nature of Gravitation and Gravitational-Wave Experiment," Physical Review Letters, 67 N. 12, 1486-1489 (1991).

Corkill, R. W. and Stewart J. M., "Numerical Relativity. II. Numerical Methods for the Characteristic Initial Value Problem and the Solution of Vacuum Field Equations for Space-times with Two Killing Vectors," Proc. R. Soc. Lond. A, 386, 373-391 (1983).

Ferrari, V., "Focusing Process in the Collision of Gravitational Plane Waves," Physical Review D, 37, No 10, 3061-3064 (1988).

Fontana, G., "Gravitational Radiation Applied to Space Travel," proceedings of the Gravitational-Wave Conference, edited by P. Murad and R. Baker, The MITRE Corporation, Mclean, Virginia, May 6-9, 2003, Paper HFGW-03-111.

Fontana, G. and Baker, R. M. L. Jr., "The High-Temperature Superconductor (HTSC) Gravitational Laser (GASER)," in the proceedings of the Gravitational-Wave Conference, edited by P. Murad and R. Baker, The MITRE Corporation, Mclean, Virginia, 2003, Paper HFGW-03-107.

Fontana, G., "Design of a Quantum Source of High-Frequency Gravitational Waves (HFGW) and Test Methodology," in the proceedings of Space Technology and Applications International Forum (STAIF-2004), edited by M. S. El-Genk, AIP Conference Proceedings 699, Melville, New York, 2004, pp. 1114-1121.

Fontana, G., "Gravitational Wave Propulsion," in the proceedings of Space Technology and Applications International Forum (STAIF-2005), edited by M. S. El-Genk, AIP Conference Proceedings 746, Melville, New York, 2005a, pp. 1331-1338.

Fontana, G., "The Four Space-times Model of Reality," the in proceedings of Space Technology and Applications International Forum (STAIF-2005), edited by M. S. El-Genk, AIP CP 746, Melville, New York, 2005b, pp. 1403-1410.

Rudenko, V. N., "Optimization of Parameters of a Coupled Generator-Receiver for a Gravitational Hertz Experiment," in Proceedings of the Gravitational-Wave Conference, edited by P. Murad and R. Baker, The MITRE Corporation, McLean, Virginia, 2003, Paper HFGW-03-113.

Szekeres, P., "Colliding Plane Gravitational Waves," J. Math. Phys, 13, No. 3, March, 286-294,(1992). Taylor, J. H., Jr, "Binary pulsar and relativistic gravity," Reviews of Modern Physics, 66, No. 3, July, 711-719 (1994.)

Thorne, K. S., "Gravitational-wave Research: Current Status and Future Prospects," Reviews of Modern Physics, 52, No. 2, Part I, April, 285-297 (1980a).

Thorne, K. S., "Multipole Expansion of Gravitational Radiation," Reviews of Modern Physics, 52, No. 2, Part I, April, 299-339 (1980b).

Thorne, K.S., "Gravitational-Wave Bursts with Memory: the Christodoulou Effect," Physical Review D, 45, January, 520-524 (1992).

Veneziano, G., "Mutual Focusing of Graviton Beams," Modern Physics Letters A, 2, No 11, 899-903 (1987).

## Claims

1. Use of a high vacuum chamber as an amplifier of a gravitational wave.

2. The use of claim 1, wherein the pressure in the high vacuum chamber is below $10^{-3}$ mbar.

3. The use of any of claims 1 to 2, wherein the ratio of a wavelength of the gravitational wave by a length of the amplifier in a propagation direction of the gravitational wave is between $10^8$ and $10^{16}$ wavelengths per meter.

4. The use of any of claims 1 to 3, wherein the amplifier amplifies the gravitational wave by a factor of 10 and $10^8$ per meter of the amplifier in a propagation direction of the gravitational wave

5. The use of any of claims 1 to 4, wherein the high vacuum chamber has a length between 0.5 and 1000 meter in a propagation direction of the gravitational wave.

6. The use of any of claims 1 to 5, wherein a non-linear material for the gravitational wave is disposed in the high vacuum chamber.

7. A device for generating a gravitational wave, comprising a generator (10, 18) of an external energy;
a primary vacuum chamber (20) with window (19) transparent for the external energy;

a first vacuum pump (21) connected to the primary vacuum chamber (20) and configured to evacuate the primary vacuum chamber (20);

a converting material (22, 12) for converting the external energy into a gravitational wave, the converting material being disposed inside the primary vacuum chamber (20) such that the external energy illuminates the converting material (22);

a second vacuum chamber (16, 23) used as an amplifier of the gravitational wave according to any of claims 1 to 6; and

a second vacuum pump (24) connected to the second vacuum chamber (16, 23) and configured to evacuate the primary vacuum chamber (16, 23).

8. A device according to claim 7, wherein the converting material is excitable into an excited state by the external energy, wherein the excited state comprises a first oscillator of a first characteristic frequency comprising a mass and emitting the gravitational wave, and a second oscillator coupled with the first oscillator, and wherein a characteristic frequency of the second oscillator is smaller than the first characteristic frequency.

9. The device according to claim 8, wherein the first oscillator is not electrically charged.

10. The device according to any of claims 8 to 9, wherein each of the first and the second oscillator comprises a subnuclear structure.

11. The device according to any of claims 8 to 10, wherein the converting material in a state other than the excited state comprises a stable or metastable nucleus, and the external energy includes at least one of an electromagnetic wave and an elementary particle.

12. The device according to claim 11, wherein the electromagnetic wave comprises at least one of X-ray and gamma ray, and wherein the elementary particle comprises at least one of a neutron, a proton, an electron, a positron, and an antiproton.

13. The device according to claim 11 or 12, wherein a number of protons in the nucleus is between 90 and 125.

14. The device according to any of claims 7 to 12, wherein the converting material comprises Gadolinium.

15. The device according to any of claims 8 to 12, wherein the first oscillator is one of a superconducting electron pair and a crystal or molecular excitation in a frictionless paired state, the second oscillator is one of a molecular structure, an atom, and a crystal lattice, and the external energy is at least one of an electromagnetic excitation, a thermal excitation, and an acoustic excitation.

FIG.1

FIG.2

FIG.3

FIG.4

22

20

26

23

24

25

21

Europäisches
Patentamt

European
Patent Office

Office européen
des brevets

# DECLARATION

**Application Number**

which under Rule 63 of the European Patent Convention EP 09 15 6549
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (IPC)<br><br>INV.<br>G01V7/00 |
|---|---|

All claims of the application include "amplification of gravitational waves". The possibility of amplification has so far not generally been recognized, prior art discusses amplification in combination with black holes. The application apparently targets amplification of gravitational waves by means of laboratory scale devices.

In the description, no clear description of an embodiment is present, only statements which say that certain materials or configuration may be used. In particular, the amplification is said to be made in a vacuum chamber, possibly by means of a nonlinear material (to gravitational waves). However no example of such a material is given in detail.

Further, reference is made to masses of nucleons, sometimes as nucleus of Gadolinium, but as well as a nucleus with Z=115, and a mass consisting of $10^7$ nucleons. NB that the generation of the latter two has not yet been reported, yet confirmed.

Further, in one configuration an exciting coherent X-ray beam is to be used, and the description makes reference to and X-ray laser with energies preferable between 30 and 70 keV. Such an laser has not yet been realised.

In consequence, the application concerns entirely subject matter, which does not comply with the requirements of Art 83 EPC, and therefore a meaningful search is not possible.

The applicant's attention is drawn to the fact that a search may be carried out
-/--

| Place of search | Date | Examiner |
|---|---|---|
| Munich | 29 July 2009 | Oestreich, Sebastian |

EPO FORM 1504 (P04F37)

Europäisches Patentamt

European Patent Office

Office européen des brevets

# DECLARATION

**Application Number**

which under Rule 63 of the European Patent Convention EP 09 15 6549
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|
| Reason:<br><br>during examination following a declaration of no search under Rule 63 EPC, should the problems which led to the declaration being issued be overcome (see EPC Guideline C-VI, 8.2).<br>-----<br>L    GAL'TSOV D V ET AL: "Amplification of gravitational waves interacting with a binary system"<br>PHYSICS LETTERS A, NORTH-HOLLAND PUBLISHING CO., AMSTERDAM, NL,<br>vol. 90, no. 7, 26 July 1982 (1982-07-26), pages 351-353, XP024623479<br>ISSN: 0375-9601 [retrieved on 1982-07-26]<br>----- | |

| Place of search | Date | Examiner |
|---|---|---|
| Munich | 29 July 2009 | Oestreich, Sebastian |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6417597 B, Robert M. L. Baker, Jr.
- US 6784591 B
- US 2719944 A
- US 318254 A
- US 2814769 A
- US 318171 A
- US 3612630 A
- US 30810 A
- US 3667019 A
- US 3903463 A
- US 318138 A
- US 3959700 A
- US 3970936 A
- US 455899 A
- US 4035658 A
- US 29055 A
- US 4052134 A
- US 416119 A
- US 4086505 A
- US 31074 A
- US 4205268 A
- US 4546264 A
- US 29054 A
- US 4968475 A
- US 376153 A
- US 5276717 A
- US 376156 A
- US 5398571 A
- US 74572 A
- US 5446018 A
- US 5514923 A
- US 5646728 A
- US 356352 A
- US 5721461 A
- US 310268 A
- US 5831362 A
- US 31090 A
- US 5929579 A
- US 318439 A
- GB 1333343 A
- US 3726146 A

### Non-patent literature cited in the description

- **Pinto ; Rotoli.** General Relativity and Gravitational Physics. World Scientific, Singapore, 1998
- *Itagaki,* 2002, 044302-4
- **Almeida, J.B.** An Alternative to Minkowski Space-time. *v2, http://arxiv.org/abs/gr-qc/0407022,* 16 July 2004
- **Almeida, J.B.** An Hypersphere Model of the Universe - The Dismissal of Dark Matter. *v3, http://arxiv.org/abs/Physics/0402075,* 16 July 2004
- Precursor Proof-of-Concept Experiments for Various Categories of High-Frequency Gravitational Wave (HFGW) Generators. **Baker, R. M. L. Jr.** proceedings of Space Technology and Applications International Forum (STAIF-2004). 2004, vol. 699, 1093-1097
- Applications of High-Frequency Gravitational Waves. **Baker, R.M.L. Jr.** proceedings of Space Technological Applications International Forum (STAIF 2005). 2005, vol. 746, 1311-1314
- Gravitational Wave Radiation Pattern at the Focus of a High-Frequency Gravitational Wave Generator and Aerospace Applications. **Baker, R.M.L., Jr. ; Davis, E.W. ; Woods, R.C.** proceedings of the Space Technological Applications International Forum (STAIF 2005). 2005, vol. 746, 1315-1322
- Geometric Phase Locked in Fine Structure. **Binder, B.** Iterative Coupling and Balancing Currents, e-Book. 2003
- Magic Angle Precession. **Binder, B.** the proceeding of Space Technology and Applications International Forum (STAIF-08). 2008, vol. 969, 1103-1110
- **Binder, B.** Magic Angle Chaotic Precession. *the proceedings CHAOS2008,* 2008
- **Brown, J.** Proof of the Manley-Rowe Relations from Quantum Considerations. *Electronics Letters,* 1965, vol. 1, 23-24
- Generation of Gravitational Waves with Nuclear Reactions. **Fontana, G. ; Baker, R. M. L. Jr.** proceedings of Space Technology and Applications International Forum (STAIF-2006). 2006, vol. 813, 1352-1358
- **Franklin, J.** Fermion Quarks of Spin 3/2. *Phys. Rev.,* 1969, vol. 180, 1583-1587

- **Halpern, L. ; Laurent, B.** On the Gravitational Radiation of Microscopic Systems. *Il Nuovo Cimento,* 1964, vol. XXXIII (3), 728-751
- **Kamal, S. ; Parker, B.** Evidence for Dineutrons in Extremely Neutron-Rich Nuclei. *Physical Review Letters,* 1991, vol. 66, 2448-2451
- **Klemperer, W. B. ; Baker, R. M. L. Jr.** Satellite Librations. *Astronautica Acta,* 1957, vol. 3, 16-27
- **Ishlinskii, A.** Mechanics of Special Gyroscopic Systems. *Izd. AN USSR,* 1952
- **Itagaki, N. et al.** Triaxial Deformation in Be. *Physical Review C,* 2002, vol. 65, 044302-1044302-6
- **Landau, L. D. ; Lifshitz, E. M.** The Classical Theory of Fields. Pergamon Press, 1975
- Coupling of an Open Cavity to Microwave Beam: A Possible New Scheme of Detecting High-Frequency Gravitational Waves. **Li, F. ; Baker, R. M. L. ; Fang, Z.** the proceedings of Space Technology and Applications International Forum (STAIF-2007). 2007, vol. 880, 1139-1147
- **Lynch, P.** Resonant Motion of the Three-dimensional Elastic Pendulum. *International Journal of Nonlinear Mechanics,* 2002, vol. 37, 345-367
- **Malykin, G. B.** The relation of Thomas precession to Ishlinskii's theorem as applied to the rotating image of a relativistically moving body. *PHYS-USP,* 1999, vol. 42, 5
- Introduction to Mechanics and Symmetry. **Marsden, J. E. ; T. Ratiu.** Texts in Applied Mathematics. Springer-Verlag, 1994, vol. 17
- **Misner, C. W. ; Thome, K. S. ; Wheeler, J. A.** Gravitation. Freeman, 1973
- **Padamsee, H.** Accelerating Applications of RF Superconductivity - Success Stories. *IEEE Transactions on Applied Superconductivity,* 2005, vol. 15, 2432-2439
- **Pauling, L.** The Close-Packed-Spheron Model of Atomic Nuclei and its Relation to the Shell Model. *Proc. Natl. Acad. Sci. USA,* 1965, vol. 54, 989-994
- **Pauling, L.** *Binding Energy of Dineutrons N≈90,* 1967, http://osufibrary.orst.edu/specialcollections/rnb/32/32-143.html
- **Pauling, L.** Orbiting Clusters in Atomic Nuclei. *Proc. Natl. Acad. Sci. USA,* 1969, vol. 64, 807-809
- **Pauling, L.** Regularities in the Sequences of the Number of Nucleons in the Revolving Cluster for the Ground-state Energy Bands of the Even-even Nuclei with Neutron Number Equal to or Greater than 126. *Proc. Natl. Acad. Sci. USA,* 1990, vol. 87, 4435-4438
- **Pinto I.M. ; Rotoli G.** Laboratory generation of gravitational waves?,'' Proceedings of 8th Italian Conference on General Relativity and Gravitational Physics. World Scientific, 30 August 1988
- **Christodoulou, D.** Nonlinear Nature of Gravitation and Gravitational-Wave Experiment. *Physical Review Letters,* 1991, vol. 67 (12), 1486-1489
- **Corkill, R. W. ; Stewart J. M.** Numerical Relativity. II. Numerical Methods for the Characteristic Initial Value Problem and the Solution of Vacuum Field Equations for Space-times with Two Killing Vectors. *Proc. R. Soc. Lond. A,* 1983, vol. 386, 373-391
- **Ferrari, V.** Focusing Process in the Collision of Gravitational Plane Waves. *Physical Review D,* 1988, vol. 37 (10), 3061-3064
- Gravitational Radiation Applied to Space Travel. **Fontana, G.** proceedings of the Gravitational-Wave Conference. The MITRE Corporation, 06 May 2003
- The High-Temperature Superconductor (HTSC) Gravitational Laser (GASER). **Fontana, G. ; Baker, R. M. L. Jr.** the proceedings of the Gravitational-Wave Conference. The MITRE Corporation, 2003
- Design of a Quantum Source of High-Frequency Gravitational Waves (HFGW) and Test Methodology. **Fontana, G.** the proceedings of Space Technology and Applications International Forum (STAIF-2004). 2004, vol. 699, 1114-1121
- Gravitational Wave Propulsion. **Fontana, G.** the proceedings of Space Technology and Applications International Forum (STAIF-2005). 2005, vol. 746, 1331-1338
- The Four Space-times Model of Reality. **Fontana, G.** proceedings of Space Technology and Applications International Forum (STAIF-2005). 2005, vol. 746, 1403-1410
- Optimization of Parameters of a Coupled Generator-Receiver for a Gravitational Hertz Experiment. **Rudenko, V. N.** Proceedings of the Gravitational-Wave Conference. The MITRE Corporation, 2003
- **Szekeres, P.** Colliding Plane Gravitational Waves. *J. Math. Phys,* March 1992, vol. 13 (3), 286-294
- **Taylor, J. H., Jr.** Binary pulsar and relativistic gravity. *Reviews of Modern Physics,* July 1994, vol. 66 (3), 711-719
- **Thorne, K. S.** Gravitational-wave Research: Current Status and Future Prospects. *Reviews of Modern Physics,* April 1980, vol. 52 (2), 285-297
- **Thorne, K. S.** Multipole Expansion of Gravitational Radiation. *Reviews of Modern Physics,* April 1980, vol. 52 (2), 299-339
- **Thorne, K.S.** Gravitational-Wave Bursts with Memory: the Christodoulou Effect. *Physical Review D,* January 1992, vol. 45, 520-524
- **Veneziano, G.** Mutual Focusing of Graviton Beams. *Modern Physics Letters A,* 1987, vol. 2 (11), 899-903